# EUROPEAN PATENT APPLICATION

(11) **EP 4 752 658 A1**
(43) Date of publication of application: **03.06.2026**
(21) Application number: 23946770.7
(22) Date of filing: 26.07.2023
(51) Int. Cl.: G05D 1/20, B25J 13/08, B25J 5/00, B25J 9/16, B25J 19/02

(54) **ROBOT**

(71) Applicant: Bear Robotics Korea, Inc., Seoul 04779 (KR)
(72) Inventor: LEE, Hyunok, Seoul 06772 (KR); PARK, Woonghee, Seoul 06772 (KR); CHO, Changseok, Seoul 06772 (KR); PARK, Sinyoung, Seoul 06772 (KR)
(74) Representative: Murgitroyd & Company
(86) International application number: PCT/KR2023/010797
(87) International publication number: WO 2025/023344

(57) **Abstract**

A robot according to one aspect of the present disclosure comprises: a memory in which a map is stored; a processor for generating a traveling path to a destination set on the map; a plurality of obstacle detection sensors for detecting an obstacle during traveling based on the traveling path; and a camera sensor for acquiring an image during traveling, wherein the processor recognizes the attribute of an obstacle existing at the destination or on the traveling path on the basis of the image acquired by the camera sensor, and increases an obstacle size set on the map on the basis of the recognized attribute of the obstacle.

## Description

### TECHNICAL FIELD

The present disclosure relates to an autonomous robot, and to a robot for preventing collisions while driving.

### BACKGROUND

Robots have been developed for industrial use and have taken on a part of factory automation. Recently, the fields of application of robots have expanded, medical robots, aerospace robots, and other robots have been developed, and domestic robots for use in ordinary homes have also been generated. Among these robots, a robot that can move on its own is called a mobile robot.

As the use of robots increases, there is a growing demand for robots that can provide a variety of information, entertainment, and services beyond the repetitive performance of simple functions.

Accordingly, various robots that are placed in homes, restaurants, stores, public places, and the like to provide convenience to people have been developed.

The robot is equipped with a number of sensors to avoid obstacles while driving, and can drive while avoiding obstacles. For example, an optical sensor determines the presence and distance of an obstacle by the amount of light reflected back from the obstacle or a time at which the light is received.

Cited reference 1 (Korean Patent Publication No. 10-2020-0108631) relates to a safety device for a mobile robot to prevent an accident, which prevents accidents of mobile robots by combining a primary safety device using a plurality of RGB-D cameras and a secondary safety device using a bumper.

Cited reference 2 (US registered patent US9535421) discloses a serving robot. The serving robot disclosed in Cited reference 2 has a touch-based display that provides an interface for a user's request and a container that can hold serving items placed inside the serving robot. The user places the serving items into the container of the serving robot, and the serving robot begins delivery when the user inputs a transport location related to the serving items on the display.

Depending on the service location and service type, the robot may be required to come very close to a service recipient. The robot may have to recognize and pass through narrow passages formed by dynamic and fixed obstacles while driving. As such, there is a need for a technology for preventing collisions when robots approach people or pass through narrow passages.

### DISCLOSURE

### Technical Problem

An object of the present disclosure is to provide a robot capable of moving to a location at which a service recipient is capable of being conveniently served.

An object of the present disclosure is to provide an optimal obstacle recognition and driving technology that takes into account the characteristics of sensors equipped with the robot.

An object of the present disclosure is to provide a robot capable of effectively responding to and driving in a narrow passage caused by obstacles.

An object of the present disclosure is to provide a robot with high efficiency and reliability in an environment in which many changes in circumstances occur.

An object of the present disclosure is to provide a robot capable of effectively establishing a path depending on the situation.

### Technical Solution

An object of a robot according to an aspect of the present disclosure is to prevent collision by changing obstacle information stored in a map depending on an obstacle present at a destination point or on a driving path.

The robot according to an aspect of the present disclosure may determine the property of an obstacle based on an image, and safely move to the closest possible location to a customer at a destination point by considering the type and sensing method of a sensor, and the property of the obstacle.

The robot according to an aspect of the present disclosure may effectively provide a service by actively changing the destination point depending on whether the destination point is occupied by an obstacle.

According to another aspect of the present disclosure, a robot includes a memory storing a map, a processor configured to generate a driving path to a destination point set on the map, a plurality of obstacle detection sensors configured to detect an obstacle while driving based on the driving path, and a camera sensor configured to obtain an image while driving, wherein, based on the image obtained by the camera sensor, the processor recognizes a property of the obstacle existing at the destination point or on the driving path, and based on the property of the recognized object, increases an obstacle size set on the map.

The processor may be configured to increase the obstacle size set on the map based on the property of the recognized obstacle corresponding to a misdetection risk obstacle set in accordance with a type and sensing method of the obstacle detection sensor.

The map may be a cost map including a plurality of grids and having costs assigned to the plurality of grids.

The processor may increase the number of grids in which the recognized obstacle is located in the cost map. Here, the processor may increase a cost value of grids in which the recognized obstacle is located in the cost map.

The processor may increase a cost value of grids in which the recognized obstacle is located in the cost map.

The obstacle detection sensor includes a light detection and ranging (LiDAR) sensor and a time of flight (ToF) sensor.

The processor may be configured to lower a noise software filtering level of the LiDAR sensor.

The processor may increase the size of the obstacle in a situation in which it is necessary to drive within a predetermined distance of a recognized obstacle, and may maintain the size of the obstacle in other situations.

The processor may change the destination point from a first destination point to a second destination point when an obstacle occupies the destination point.

The processor may determine a point farthest from the first destination point among moving candidate points as the second destination point based on placement distribution of an obstacle adjacent to the first destination point.

The moving candidate point may be a point to which the robot is capable of moving among points around a table closest to the first destination point.

The processor may determine a property of an obstacle forming a narrow passage on the driving path, increase the obstacle size set on the map based on the property of the recognized obstacle corresponding to a misdetection risk obstacle set in accordance with a type and sensing method of the obstacle detection sensor, and regenerate the driving path.

According to another aspect of the present disclosure, a robot includes a memory storing a map, a processor configured to generate a driving path to a first destination point set on the map, a plurality of obstacle detection sensors configured to detect an obstacle while driving based on the driving path, and a camera sensor configured to obtain an image during the driving, wherein, based on presence of an obstacle occupying the first destination point, the processor recognizes a property of the obstacle occupying the first destination point based on the image obtained by the camera sensor, and changes a destination point to a second destination point based on the property of the recognized obstacle corresponding to a misdetection risk obstacle set in accordance with a type and sensing method of the obstacle detection sensor.

Based on changing of the destination point to the second destination point being impossible,

The processor may increase an object size set on the map.

The map may be a cost map including a plurality of grids and having costs assigned to the plurality of grids, and the processor may increase a number of grids in which the recognized obstacle is located in the cost map. Here, the processor may increase a cost value of grids in which the recognized obstacle is located in the cost map.

The map may be a cost map including a plurality of grids to which costs are assigned, and the processor may increase a cost value of the grids in which the recognized obstacle is located in the cost map.

The processor may determine a point farthest from the first destination point among moving candidate points as the second destination point based on placement distribution of an obstacle adjacent to the first destination point.

The obstacle detection sensor may include a LiDAR sensor, and the processor may lower a noise software filtering level of the LiDAR sensor.

According to the present embodiment, the processor may determine a property of an obstacle forming a narrow passage on the driving path, increase the obstacle size set on the map based on the property of the recognized obstacle corresponding to a misdetection risk obstacle set in accordance with a type and sensing method of the obstacle detection sensor, and regenerate the driving path.

### Advantageous Effects

According to at least one of embodiments of the present disclosure, a robot may safely move to a location in which a service recipient is capable of being comfortably served, thereby improving usability and reliability.

According to at least one of embodiments of the present disclosure, an optimal obstacle recognition and driving technology that takes into account the characteristics of sensors equipped with the robot may be implemented.

According to at least one of embodiments of the present disclosure, a narrow passage caused by obstacles may be effectively responded for driving on the narrow passage.

According to at least one of embodiments of the present disclosure, a robot with high efficiency and reliability may be provided even in an environment with many changing situations by effectively establishing a path according to a situation and driving while avoiding obstacles.

### BRIEF DESCRIPTION OF THE DRAWINGS

FIG. 1 illustrates an AI device according to an embodiment of the present disclosure.
FIG. 2 illustrates an AI server according to an embodiment of the present disclosure.
FIG. 3 illustrates an AI system according to an embodiment of the present disclosure.
FIG. 4 illustrates a robot according to an embodiment of the present disclosure.
FIG. 5 is a block diagram showing a control relationship between main components of a robot according to an embodiment of the present disclosure.
FIG. 6 is a flowchart illustrating an operating method of a robot according to an embodiment of the present disclosure.
FIGS. 7 to 16c are drawings for reference in a description of an operating method of a robot according to an embodiment of the present disclosure.
FIG. 17 is a flowchart illustrating an operating method of a robot according to an embodiment of the present disclosure.
FIGS. 18 to 20 are drawings for reference in a description of an operating method of a robot according to an embodiment of the present disclosure.
FIG. 21 is a diagram for reference in a description of sensing software processing according to an embodiment of the present disclosure.

### DETAILED DESCRIPTION

Hereinafter, the present disclosure will be described in detail by explaining embodiments of the present disclosure with reference to the attached drawings. However, the present disclosure is not limited to the embodiments disclosed below, but may be implemented in various different forms.

In the drawings, parts that are not related to the description are omitted to clearly and simply explain the present disclosure, and the same drawing reference numerals are used for identical or extremely similar parts throughout the specification.

The suffixes "module" and "unit" of elements herein are used for convenience of description and thus can be used interchangeably and do not have any distinguishable meanings or functions. Therefore, the "module" and "unit" may be used interchangeably.

The terms such as "first" and "second" are used herein merely to describe a variety of constituent elements, but the constituent elements are not limited by the terms. The terms are used only for the purpose of distinguishing one constituent element from another constituent element.

Artificial Intelligence (AI) refers to a field that studies artificial intelligence or the methodologies for generating the artificial intelligence, and machine learning (ML) refers to a field that defines various problems in the field of artificial intelligence and studies the methodologies for resolving the problems. The ML is defined as an algorithm that improves its performance on a task through continuous experience.

Artificial neural network (ANN) is a model used in machine learning, and may refer to a model with problem-solving capabilities that include artificial neurons (nodes) that form a network through a combination of synapses. The ANN may be defined by connection patterns between neurons in different layers, a learning process that updates model parameters, and an activation function that generates an output value.

The ANN may include an input layer, an output layer, and optionally one or more hidden layers. Each layer may include one or more neurons, and the ANN may include synapses connecting neurons. In the ANN, each neuron may output a function value of an activation function for input signals, weights, and biases received through synapses.

A model parameter refers to a parameter determined through learning, including the weights of synaptic connections and the bias of neurons. A hyperparameter refers to a parameter that needs to be set before learning in a machine learning algorithm, including a learning rate, the number of iterations, a mini-batch size, and an initialization function.

An object of learning of the ANN may be seen as determining a model parameter that minimizes a loss function. The loss function may be used as an indicator to determine an optimal model parameter during a learning process of an ANN.

Machine learning may be classified into supervised learning, unsupervised learning, and reinforcement learning depending on a learning method.

The supervised learning may refer to a method of training an ANN given a label for training data, and the label may refer to a correct answer (or result value) that the ANN needs to infer when training data is input to the ANN. The unsupervised learning may refer to a method of training the ANN without being given a label for the training data. The reinforcement learning may refer to a learning method that teaches an agent defined in an environment to select a behavior or behavior sequence that maximizes the cumulative reward in each state.

Among ANNs, machine learning implemented with a deep neural network (DNN) that includes a plurality of hidden layers is also called deep learning, and deep learning is a part of machine learning. Hereinafter, machine learning is used to mean deep learning.

An object detection model using machine learning includes a single-step you only look once (YOLO) model and two-step faster regions with convolution neural network (R-CNN) model.

The YOLO model is a model that may predict an object within an image and the position of the corresponding object by looking at the image only once.

The YOLO model divides an original image into grids of the same size. For each grid, the number of bounding boxes specified in a predefined shape centered around the center of the grid is predicted, and the reliability is calculated based thereon.

Then, whether the image includes an object or only a background, and the position with high object reliability is selected such that an object category may be identified.

The faster R-CNN model is a model that may detect an object faster than the RCNN model and the fast RCNN model.

The faster R-CNN model is described in detail.

First, a feature map is extracted from the image through a convolution neural network (CNN) model. Based on the extracted feature map, a plurality of regions of interest (RoI) are extracted. RoI pooling is performed on each RoI.

The RoI pooling is a process of setting a grid to a predetermined size of H x W for a feature map onto which the RoI is projected, extracting the largest value for each cell included in each grid, and extracting the feature map with a size of H x W.

A feature vector may be extracted from the feature map having a size of H x W, and object identification information may be obtained from the feature vector.

A robot may mean a machine that automatically processes or operates a given task with the abilities the robot possesses. In particular, a robot that has the ability to recognize the environment, make determination on its own, and perform operations may be called an intelligent robot.

Robots may be classified into industrial, medical, household, and military types depending on their purpose or field of use.

The robot has a driving unit including an actuator or a motor to perform various physical operations such as moving the robot joints. The mobile robot includes wheels, brakes, and propellers in its driving unit, and may drive on the ground or fly in the air through its driving unit.

Self-driving refers to the technology of autonomously driving, and an autonomous vehicle refers to a vehicle that drives without user intervention or with minimal user intervention.

For example, self-driving may include a technology that maintains a driving lane, a technology that automatically adjusts speed such as adaptive cruise control, a technology that automatically drives a vehicle along a set route, and a technology that automatically sets a route and drives a vehicle when a destination is set.

A vehicle includes a vehicle including only an internal combustion engine, a hybrid vehicle including both an internal combustion engine and an electric motor, and an electric vehicle including an electric motor, and may include not only an automobile but also a train, and a motorcycle.

In this case, the autonomous vehicle may be viewed as a robot with an autonomous driving function.

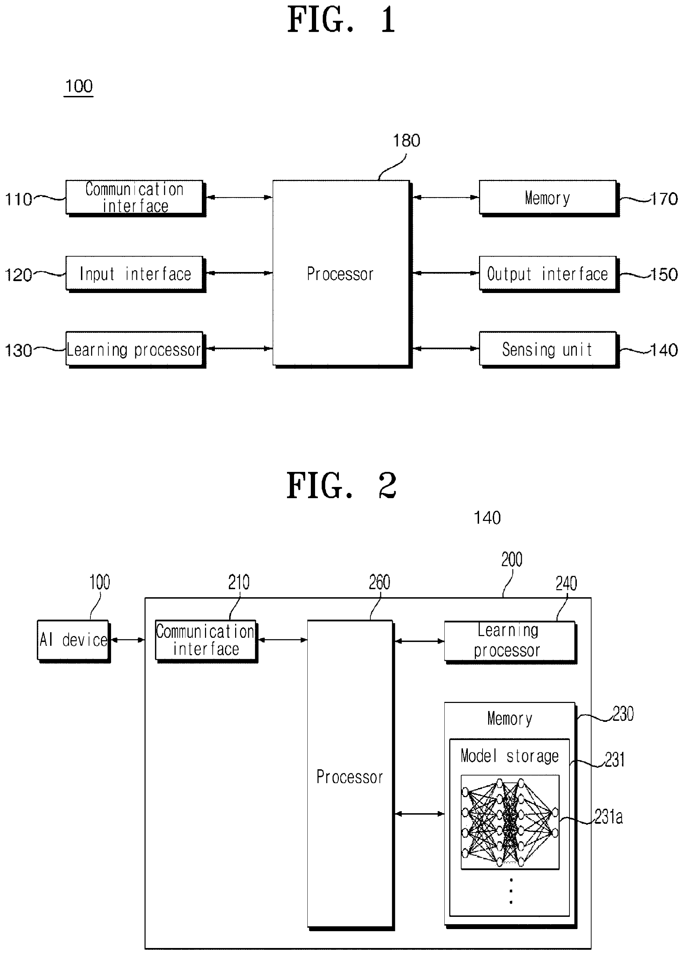

FIG. 1 illustrates an AI device 100 according to an embodiment of the present disclosure.

The AI device 100 may be implemented as a fixed or mobile device, such as a television (TV), a projector, a mobile phone, a smartphone, a desktop computer, a laptop, a digital broadcasting terminal, a personal digital assistant (PDA), a portable multimedia player (PMP), a navigation device, a tablet PC, a wearable device, a set-top box (STB), a DMB receiver, a radio device, a washing machine, a refrigerator, a desktop computer, a digital signage, a robot, or a vehicle.

Referring to FIG. 1, the terminal 100 may include a communication interface 110, an input interface 120, a learning processor 130, a sensing unit 140, an output interface 150, a memory 170, and a processor 180.

The communication interface 110 may transmit and receive data with external devices such as other AI devices 100a to 100e or an AI server 200 by using wired or wireless communication technology. For example, the communication interface 110 may transmit and receive sensor information, user input, learning models, control signals, and the like with external devices.

In this case, the communication technologies used by the communication interface 110 include global system for mobile communication (GSM), code division multi access (CDMA), long term evolution (LTE), 5G, wireless LAN (WLAN), wireless-fidelity (Wi-Fi), Bluetooth, radio frequency identification (RFID), infrared data association (IrDA), ZigBee, and near field communication (NFC).

The input interface 120 may obtain various types of data.

In this case, the input interface 120 may include a camera for inputting a video signal, a microphone for receiving an audio signal, and a user input interface for receiving information from a user. Here, the camera or the microphone is treated as a sensor, and a signal obtained from the camera or the microphone may be called sensing data or sensor information.

The input interface 120 may obtain training data for model learning and input data to be used when obtaining output by using the learning model. The input interface 120 may obtain raw input data, in which case the processor 180 or the learning processor 130 may extract input features as preprocessing for the input data.

The learning processor 130 may train a model composed of an ANN by training data. Here, the learned ANN may be called a learning model. The learning model may be used to infer a result value for new input data other than training data, and the inferred value may be used as the basis for determination to perform a certain operation.

In this case, the learning processor 130 may perform AI processing together with a learning processor 240 of the AI server 200.

In this case, the learning processor 130 may include memory integrated or implemented in the AI device 100. Alternatively, the learning processor 130 may be implemented using the memory 170, external memory directly coupled to the AI device 100, or memory maintained in the external device.

The sensing unit 140 may obtain at least one of internal information of the AI device 100, information about the surrounding environment of the AI device 100, or user information by using various sensors.

In this case, sensors included in the sensing unit 140 include a proximity sensor, a light sensor, an acceleration sensor, a magnetic sensor, a gyro sensor, an inertial sensor, an RGB sensor, an IR sensor, a fingerprint recognition sensor, an ultrasonic sensor, a light sensor, a microphone, a lidar, and a radar.

The output interface 150 may generate output related to visual, auditory or tactile sensations.

In this case, the output interface 150 may include a display unit that outputs visual information, a speaker that outputs auditory information, and a haptic module that outputs tactile information.

The memory 170 may store data that supports various functions of the AI device 100. For example, the memory 170 may store input data, training data, learning models, and learning history that are obtained by the input interface 120.

The processor 180 may determine at least one executable operation of the AI device 100 based on information determined or generated using a data analysis algorithm or a machine learning algorithm. The processor 180 may control components of the AI device 100 to perform the determined operation.

To this end, the processor 180 may request, retrieve, receive or utilize data from the learning processor 130 or the memory 170, and control components of the AI device 100 to execute at least one of the executable operations, a predicted operation or an operation determined to be desirable.

In this case, when the processor 180 requires connection of an external device to perform the determined operation, the processor 180 may generate a control signal for controlling the corresponding external device and transmit the generated control signal to the external device.

The processor 180 may obtain intent information for user input and determine the user's requirements based on the obtained intent information.

In this case, the processor 180 may obtain intent information corresponding to the user input by using at least one of a speech to text (STT) engine for converting voice input into a string or a natural language processing (NLP) engine for obtaining intent information of natural language.

In this case, at least one of the STT engine or the NLP engine may be configured with an ANN that is at least partially trained according to a machine learning algorithm. At least one of the STT engine or the NLP engine may be learned by the learning processor 130, learned by the learning processor 240 of the AI server 200, or learned by distributed processing thereof.

The processor 180 may collect history information including details of the operation of the AI device 100 or user feedback on the operation, and store the information in the memory 170 or the learning processor 130, or transmit the information to an external device such as the AI server 200. The collected history information may be used to update the learning model.

The processor 180 may control at least some of the components of the AI device 100 to drive an application program stored in the memory 170. The processor 180 may operate two or more of the components included in the AI device 100 in combination to drive the application program.

FIG. 2 illustrates the AI server 200 according to an embodiment of the present disclosure.

Referring to FIG. 2, the AI server 200 may refer to a device that trains an artificial neural network (ANN) by using a machine learning algorithm or uses the ANN. Here, the AI server 200 may include a plurality of servers to perform distributed processing, and may be defined as a 5G network. In this case, the AI server 200 may be included as some of the components of the AI device 100 and may perform at least part of the AI processing together.

The AI server 200 may include a communication interface 210, memory 230, the learning processor 240, and a processor 260.

The communication interface 210 may transmit and receive data with an external device such as the AI device 100.

The memory 230 may include a model storage 231. The model storage 231 may store a model (or artificial neural network 231a) being learned or learned through the learning processor 240.

The learning processor 240 may train the artificial neural network 231a by using learning data. The learning model may be used while mounted on the AI server 200 of the artificial neural network, or may be used while mounted on an external device such as AI device 100.

The learning model may be implemented in hardware, software, or a combination of hardware and software. When part or all of the learning model is implemented in software, one or more instructions constituting the learning model may be stored in the memory 230.

The processor 260 may infer a result value for new input data by using the learning model and generate a response or control command based on the inferred result value.

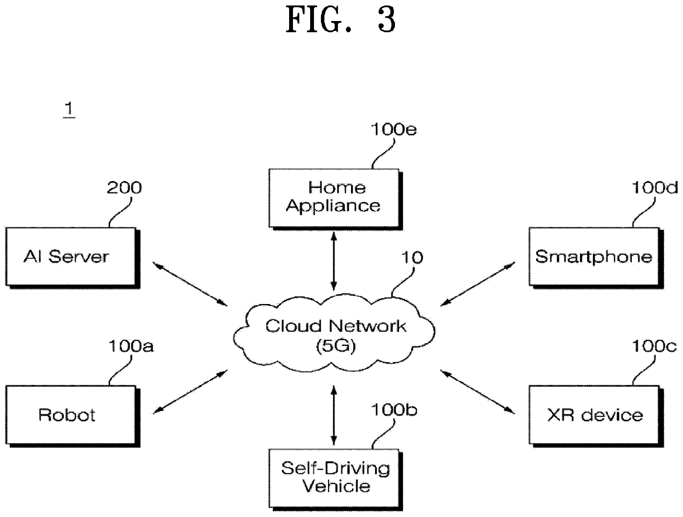

FIG. 3 illustrates an AI system 1 according to an embodiment of the present disclosure.

Referring to FIG. 3, in the AI system 1, at least one of the AI server 200, a robot 100a, an autonomous vehicle 100b, an XR device 100c, a smartphone 100d, or a home appliance 100e is connected to a cloud network 10. Here, the robot 100a, the autonomous vehicle 100b, the XR device 100c, the smartphone 100d, or the home appliance 100e to which AI technology is applied may be referred to as the AI devices 100a to 100e.

The cloud network 10 may mean a network that constitutes part of a cloud computing infrastructure or exists within a cloud computing infrastructure. Here, the cloud network 10 may be configured using a 3G network, a 4G or long term evolution (LTE) network, or a 5G network.

That is, each of the device 100a to 100e and 200 constituting the AI system 1 may be connected to each other through the cloud network 10. In particular, each of the device 100a to 100e and 200 may communicate with each other through a base station, but may also communicate with each other directly without going through a base station.

The AI server 200 may include a server that performs AI processing and a server that performs an operation on big data.

The AI server 200 is connected to at least one of the AI devices constituting the AI system 1, such as the robot 100a, the autonomous vehicle 100b, the XR device 100c, the smartphone 100d, or the home appliance 100e, through the cloud network 10, and may assist at least part of the AI processing of the connected AI devices 100a to 100e.

In this case, the AI server 200 may train an artificial neural network according to a machine learning algorithm on behalf of the AI devices 100a to 100e, and may directly store the learning model or transmit the learning model to the AI devices 100a to 100e.

In this case, the AI server 200 may receive input data from the AI devices 100a to 100e, infer a result value for the received input data by using the learning model, and generate a response or control command based on the inferred result value to transmit the response or the control command to the AI devices 100a to 100e.

Alternatively, the AI devices 100a to 100e may infer a result value for input data by using a direct learning model and generate a response or control command based on the inferred result value.

Hereinafter, various embodiments of the AI devices 100a to 100e to which the technology described above is applied are described. Here, the AI devices 100a to 100e illustrated in FIG. 3 may be viewed as specific embodiments of the AI device 100 illustrated in FIG. 1.

The robot 100a may be implemented as a guide robot, transport robot, cleaning robot, wearable robot, entertainment robot, pet robot, unmanned flying robot, or the like by applying AI technology.

The robot 100a may include a robot control module configured to control movement, and the robot control module may mean a software module or a chip that implements the same as hardware.

The robot 100a may obtain state information of the robot 100a, detect (recognize) a surrounding environment and objects, generate map data, determine a movement path and driving plan, determine a response to user interaction, or determine an operation by using sensor information obtained from various types of sensors.

Here, the robot 100a may use sensor information obtained by at least one sensor among a LiDAR, a radar, and a camera to determine a movement path and driving plan.

The robot 100a may perform the operations described above by using a learning model including at least one artificial neural network. For example, the robot 100a may recognize the surrounding environment and object by using a learning model, and determine an operation by using the recognized surrounding environment information or object information. Here, the learning model may be learned directly from the robot 100a or from an external device such as the AI server 200.

In this case, the robot 100a may perform an operation by directly generating a result by using the learning model, but may also perform an operation by transmitting sensor information to an external device such as the AI server 200 and receiving the result generated accordingly.

The robot 100a may determine a movement path and a driving plan by using at least one of map data, object information detected from the sensor information, or object information obtained from the external device, and control a driving unit to drive the robot 100a according to the determined movement path and driving plan.

The map data may include object identification information for various objects placed in a space in which the robot 100a moves. For example, the map data may include object identification information for fixed objects such as walls and doors, and movable objects such as flower pots and desks. The object identification information may include a name, a type, a distance, and a location.

The robot 100a may perform an operation or drive by controlling the driving unit based on the control/interaction of a user. In this case, the robot 100a may obtain intention information of interaction according to the movement or voice utterance of the user and perform an operation by determining a response based on the obtained intention information.

The autonomous vehicle 100b may be implemented as a mobile robot, a vehicle, an unmanned aerial vehicle, or the like by applying AI technology.

The autonomous vehicle 100b may include an autonomous driving control module for controlling an autonomous driving function, and the autonomous driving control module may mean a software module or a chip that implements the same as hardware. The autonomous driving control module may be included internally as a component of the autonomous vehicle 100b, but may also be configured as separate hardware and connected to the outside of the autonomous vehicle 100b.

The autonomous vehicle 100b may obtain state information of the autonomous vehicle 100b, detect (recognize) a surrounding environment and objects, generate map data, determine a movement path and driving plan, or determine an operation.

Here, the autonomous vehicle 100b may use sensor information obtained by at least one sensor among a LiDAR, a radar, and a camera, similar to the robot 100a, to determine a movement path and a driving plan.

In particular, the autonomous vehicle 100b may receive or recognize sensor information about the environment or objects in an area in which the field of view is obstructed or an area beyond a certain distance from external devices or may receive information recognized directly from external devices.

The autonomous vehicle 100b may perform the operations described above by using a learning model including at least one artificial neural network. For example, the autonomous vehicle 100b may recognize the surrounding environment and object by using a learning model, and determine a driving route by using the recognized surrounding environment information or object information. Here, the learning model may be learned directly from the autonomous vehicle 100b or from an external device such as the AI server 200.

In this case, the autonomous vehicle 100b may perform an operation by directly generating a result by using the learning model, but may also perform an operation by transmitting sensor information to an external device such as the AI server 200 and receiving the result generated accordingly.

The autonomous vehicle 100b may determine a movement path and a driving plan by using at least one of map data, object information detected from the sensor information, or object information obtained from the external device, and control a driving unit to drive the autonomous vehicle 100b according to the determined movement path and driving plan.

The map data may include object identification information for various objects placed in a space (e.g., a road) in which the autonomous vehicle 100b drives. For example, the map data may include object identification information for fixed objects such as streetlights, rocks, and buildings, and movable objects such as vehicles and pedestrians. The object identification information may include a name, a type, a distance, and a location.

The autonomous vehicle 100b may perform an operation or drive by controlling the driving unit based on the control/interaction of a user. In this case, the autonomous vehicle 100b may obtain intention information of interaction according to the movement or voice utterance of the user and perform an operation by determining a response based on the obtained intention information.

The robot 100a may be implemented as a guide robot, transport robot, cleaning robot, wearable robot, entertainment robot, pet robot, unmanned flying robot, or the like by applying AI technology and autonomous driving technology.

The robot 100a to which AI technology and autonomous driving technology are applied may refer to a robot itself with autonomous driving function, or the robot 100a that interacts with the autonomous vehicle 100b.

The robot 100a with an autonomous driving function may be a general term for devices that move on their own along a given path without user control or determine the path on their own to move.

The robot 100a and the autonomous vehicle 100b having an autonomous driving function may use a common sensing method to determine one or more of a movement path or a driving plan. For example, the robot 100a and the autonomous vehicle 100b having an autonomous driving function may determine one or more of a movement path or a driving plan by using information sensed through a LiDAR, a radar, or a camera.

The robot 100a interacting with the autonomous vehicle 100b may exist separately from the autonomous vehicle 100b, be linked to the autonomous driving function within the autonomous vehicle 100b, or perform an operation linked to a user riding in the autonomous vehicle 100b.

In this case, the robot 100a interacting with the autonomous vehicle 100b may control or assist the autonomous driving function of the autonomous vehicle 100b by obtaining sensor information on behalf of the autonomous vehicle 100b and providing the sensor information to the autonomous vehicle 100b or by acquiring sensor information and generating surrounding environment information or object information and providing the generated information to the autonomous vehicle 100b.

Alternatively, the robot 100a interacting with the autonomous vehicle 100b may monitor a user riding in the autonomous vehicle 100b or control a function of the autonomous vehicle 100b through interaction with the user. For example, when the robot 100a determines that a driver is drowsy, the robot 100a may activate the autonomous driving function of the autonomous vehicle 100b or assist in controlling the driving unit of the autonomous vehicle 100b. Here, the function of the autonomous vehicle 100b controlled by the robot 100a may include not only the autonomous driving function, but also the function provided by a navigation system or audio system provided inside the autonomous vehicle 100b.

Alternatively, the robot 100a interacting with the autonomous vehicle 100b may provide information to the autonomous vehicle 100b or assist functions from outside the autonomous vehicle 100b. For example, the robot 100a may provide traffic information including signal information to the autonomous vehicle 100b, such as a smart traffic light, or may interact with the autonomous vehicle 100b to automatically connect an electric charger to a charging port, such as an automatic electric charger for an electric vehicle.

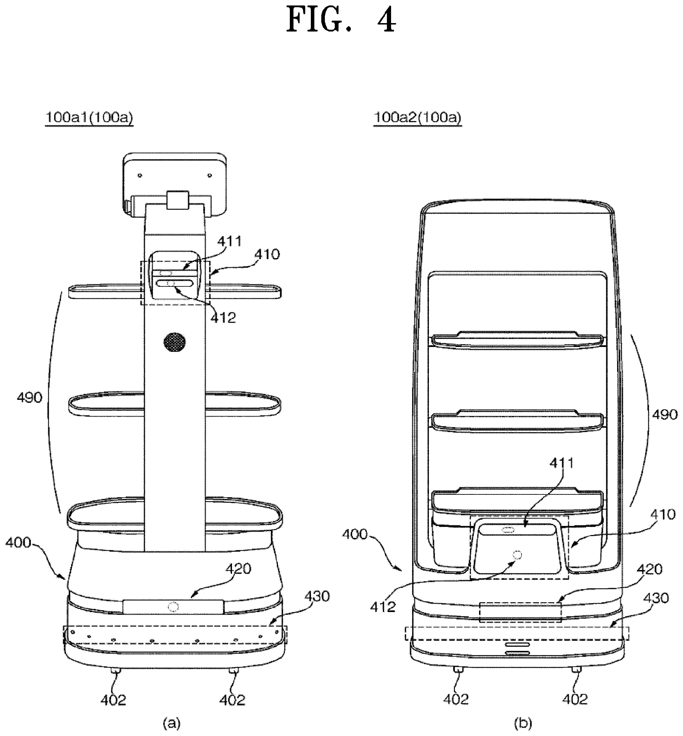

FIG. 4 illustrates the AI device 100 according to an embodiment of the present disclosure. In more detail, FIG. 4 illustrates the robot 100a according to an embodiment of the present disclosure.

FIG. 4 illustrates serving robots 100a1 and 100a2 that mainly serve items such as food. Referring to FIG. 4, the robot 100a may include a main body 400 and a service module 490.

The main body 400 may form a base of the robot 100a. The main body 400 may include a driving wheel 402 that drives the robot 100a. The driving wheel 402 may protrude from a lower side of the main body 400.

Various parts may be accommodated in the main body 400. The main body 400 may include a plurality of sensors.

For example, the main body 400 may include a LiDAR sensor 420. The LiDAR sensor 420 may be placed in a recessed portion formed in the main body 400.

The main body 400 may include a plurality of time of flight (ToF) sensors 430. The plurality of ToF sensors 430 may be spaced apart from each other in a circumferential direction of the main body 400. In more detail, the ToF sensors 430 may be arranged on an outer periphery of the main body 400 to detect objects around the robot 100a.

The ToF sensor 430 may be installed at a lower position than the LiDAR sensor 420. In more detail, based on a bottom of the main body 400, the height of the ToF sensor 430 may be lower than the height of the LiDAR sensor 420.

The ToF sensor 430 may be an optical ToF sensor 430 that calculates a distance by measuring a time (time of flight) during which light hits an object and is reflected. The ToF sensor 430 may use an ultrasonic sensor that measures a time of flight (ToF) by using ultrasonic waves.

A camera module 410 may be placed in the main body 400. The camera module 410 may include one or more cameras. The camera module 410 may include a camera sensor 412 that obtains an image and a depth camera 411 capable of measuring a distance to an obstacle.

The depth camera 411 may obtain a depth image and measure a distance to an obstacle. The camera sensor 412 may be an RGB 2D camera and may obtain an image of the surroundings of the robot 100a.

Unlike the example of FIG. 4, the depth camera 411 and the camera sensor 412 may be separately placed at different locations. The camera module 410 may be an RGB-D camera in which the depth camera 411 and the camera sensor 412 are integrated.

The service module 490 may cover the main body 400 from an upper side. The service module 490 may include a plurality of shelves and may accommodate items. The robot 100a may drive autonomously while an item is stored in the service module 490.

The robot 100a according to an embodiment of the present disclosure is not limited to the example of FIG. 4. The serving robot 100al illustrated in (a) of FIG. 4 and the serving robot 100a2 illustrated in (b) of FIG. 4 are different in the shape of the main body 400 and the service module 490, the positions of the sensors 410, 420, and 430, and the driving wheel 402. As such, the robot 100a according to an embodiment of the present disclosure may be configured in various ways in terms of appearance, position of each part, and combination.

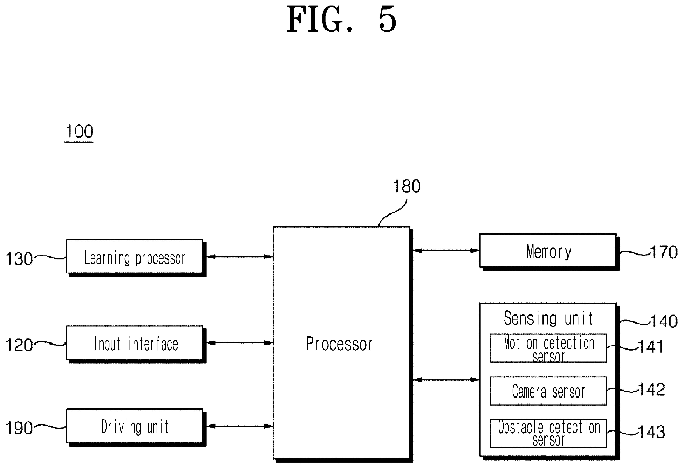

FIG. 5 is a block diagram showing a control relationship between the main components of the robot 100a according to an embodiment of the present disclosure. Repeated descriptions of FIG. 1 are omitted.

Referring to FIG. 5, the robot 100a according to an embodiment of the present disclosure includes the processor 180 that controls the overall operation of the robot 100a, the memory 170 that stores various data, a driving unit 190 that moves the main body 400 including the driving wheel 402, the sensing unit 140 that includes a plurality of sensors, and the input interface 120. The robot 100a further includes the learning processor 130 described above and may utilize AI for obstacle recognition, and the like.

The processor 180 may control the overall operation of the robot 100a by controlling the memory 170, the driving unit 190, the sensing unit 140, and the like within the robot 100a.

The memory 170 may record various information necessary to control the robot 100a and may include a volatile or non-volatile recording medium.

A map for a driving area may be stored in the memory 170. The map may be input by an external terminal, a server, or the like that is capable of exchanging information with the robot 100a through wired or wireless communication, or may be generated by the robot 100a through self-learning.

The map for the driving area stored in the memory 170 may be a navigation map used for driving, a simultaneous localization and mapping (SLAM) map used for location recognition, a global location map used for global location recognition, a local map used for local location recognition, an obstacle recognition map in which information about recognized obstacles is recorded, or the like.

A global path refers to a path from a starting position or current position of the robot as a starting point to a target point. A local path is a path newly generated by a robot while the robot drives along a global path or a newly generated local path, and is a path generated by the robot by detecting an obstacle in the surroundings at regular intervals.

As described above, maps may be stored and managed in the memory 170 by purpose, but the maps may not be clearly divided by purpose. A plurality of pieces of information may be stored on a single map, allowing the map to be used for at least two purposes. For example, the local map may include information about obstacles.

The driving unit 190 may move the main body 400 under the control of the processor 180. The driving unit 190 may include at least one driving wheel 402 that moves the main body of the robot 100a. The driving unit 190 may include a driving motor (not shown) that is connected to the driving wheel 402 and rotates the driving wheel 402.

The driving wheels 402 may be provided on the left and right sides of the main body 400, and are hereinafter referred to as a left wheel and a right wheel, respectively. The left and right wheels may be driven by a single driving motor, but a left driving motor for driving the left wheel and a right driving motor for driving the right wheel may be provided respectively, as needed. A driving direction of the main body 400 may be changed to the left or right by differentiating the rotation speeds of the left and right wheels.

The robot 100a may include the sensing unit 140 including sensors that sense various data related to the operation and state of the robot 100a.

The robot 100a may include a motion detection sensor 141 that detects the motion of the robot 100a and outputs motion information. For example, the motion detection sensor may include a gyro sensor, a wheel sensor, and an acceleration sensor.

The gyro sensor detects a rotation direction and a rotation angle when the robot 100a moves according to a driving mode. The gyro sensor detects an angular velocity of the robot 100a and outputs a voltage value proportional to the angular velocity. The processor 180 calculates the rotation direction and rotation angle by using the voltage value output from the gyro sensor.

The wheel sensor is connected to the left and right wheels and detects the number of rotations of the wheels. Here, the wheel sensor may be a rotary encoder. The rotary encoder detects and outputs the number of rotations of the left and right wheels.

The processor 180 may calculate the rotational speed of the left and right wheels by using the number of rotations. The processor 180 may calculate a rotation angle by using a difference in the number of rotations between the left and right wheels.

The acceleration sensor detects a change in the speed of the robot 100a, for example, a change in the robot 100a due to starting, stopping, changing direction, or collision with an object. The acceleration sensor may be attached to adjacent locations of the main or auxiliary wheels to detect wheel slippage or idling.

The acceleration sensor may detect a change in the speed of the robot 100a. That is, the acceleration sensor detects the amount of impact according to a change in speed and outputs a corresponding voltage value. Therefore, the acceleration sensor may perform the function of an electronic bumper.

The processor 180 may calculate a change in position of the robot 100a based on the motion information output from the motion detection sensor. The position may be a relative position corresponding to an absolute position using image information. The robot 100a may improve the performance of position recognition by using image information and obstacle information through such relative position recognition.

The motion detection sensor 141 may include an inertial measurement unit (IMU) sensor. The IMU sensor may recognize a movement situation of the robot 100a by using an accelerometer, an angular velocity meter, a magnetometer, and an altimeter.

The robot 100a may include the camera sensor 412 capable of photographing a predetermined range. The camera sensor 412 may be used to capture images of the surroundings of the robot 100a, the external environment, and the like and a plurality of camera sensors 412 may be installed in respective parts for improving photographing efficiency.

The processor 180 may determine an external situation or recognize a user, obstacle, and the like based on the image captured by the camera sensor 412.

The processor 180 may control the robot 100a to drive based on the image captured by the camera sensor 412.

The image captured by the camera sensor 412 may be stored in the memory 170.

The robot 100a may include an obstacle detection sensor 143 that detects obstacles. The obstacle detection sensor 143 may include an infrared sensor, an ultrasonic sensor, the ToF sensor 430, an RF sensor, a geomagnetic sensor, a position sensitive device (PSD) sensor, a cliff detection sensor that detects the presence of a cliff on the ground within a driving area, and a light detection and ranging (LiDAR) sensor 420.

The obstacle detection sensor 143 may measure not only the presence of an obstacle but also a distance between the obstacle and the robot 100a. Therefore, the obstacle detection sensor 143 may also be referred to as a distance sensor.

The obstacle detection sensor 143 detects objects, particularly obstacles, existing in a driving (moving) direction of the robot 100a and transmits obstacle information to the processor 180. In this case, the processor 180 may control the movement of the robot 100a according to the location of the detected obstacle.

The LiDAR sensor 420 may output a laser and provide information such as a distance, location, direction, and material of an object that reflects the laser, and may obtain geometry information of a driving area. The robot 100a may obtain 360-degree geometry information by using the LiDAR sensor 420.

The robot 100a may generate a map by identifying the distance, location, direction, and the like of objects sensed by the LiDAR sensor 420. The robot 100a may obtain geometry information of a driving area by analyzing a laser reception pattern, such as a time difference or signal intensity of a laser reflected from the outside and received. The robot 100a may generate a map by using the geometry information obtained through the LiDAR sensor 420.

For example, the robot 100a may perform LiDAR slam to recognize the current location by comparing the surrounding geometry information obtained at the current location through the LiDAR sensor 420 with a previously stored geometry information based on the LiDAR sensor or by comparing the obtained geometry information.

The processor 180 may receive a destination through a user input interface of the input interface 120. Alternatively, the processor 180 may receive the destination through the communication interface 110. The processor 180 may generate a driving path of the robot 100a. When the processor 180 receives information about a destination, the processor 180 may load the map stored in the memory 170. For example, a user may select a destination such as in front of a table, in front of a chair, or a specific location within the map. Accordingly, the processor 180 may convert the destination selected by the user into coordinates corresponding to the map, and generate a driving path from a starting point, which is the current location, to a destination point corresponding to the destination.

The map stored in the memory 170 may be a grid map including a plurality of grids for the driving area. The grid map includes a plurality of grid cells formed by a plurality of vertical grid lines and a plurality of horizontal grid lines. The grid cell is the smallest unit formed by four grid lines and may also be called a grid.

A map including obstacle information may be a cost map in which costs are assigned to a plurality of grids. For example, a global map used for global path planning and/or a local map used for local path planning may include a cost map.

The processor 180 may generate a map for the driving area based on information detected by the sensing unit 140. The processor 180 may generate a two-dimensional or three-dimensional map by combining data obtained by various sensors of the sensing unit 140.

The processor 180 may assign a cost to each grid included in the cost map based on obstacle information detected by the sensing unit 140 and generate a driving path with the lowest cost from the starting point to the destination point.

The processor 180 may update the cost map by integrating dynamic obstacles detected during driving and newly detected fixed obstacles. The processor 180 may regenerate a path to the destination point based on the updated cost map.

When the robot 100a provides a serving service of delivering food or goods in a restaurant, store, or the like, it is required that the robot 100a approach as close as possible to a table or a person. For example, when the robot 100a arrives at a table of a customer, the robot 100a needs to be within arm's reach of the customer. The robot 100a needs to easily pass through a narrow passage/width based on determination regarding dynamic obstacles and non-fixed obstacles, and a situation may arise in which the robot 100a needs to drive even close to an obstacle.

However, depending on the specifications, combination, and placement of the obstacle detection sensor 143 such as the LiDAR sensor 420, the ToF sensor 430, and the depth camera 411, there may be objects or ranges that are not detected or are difficult to detect.

For example, there is a risk of false detection in the optical obstacle detection sensor 143 for a reflective material such as metal, and there is a risk of false detection in an ultrasonic sensor from a material capable of absorbing sound waves. The depth camera 411 has a risk of false detection in repetitive patterns, and the LiDAR sensor 420 has a risk of false detection in thin objects.

The depth camera 411 may detect a certain height section, but a sensing range varies depending on the placement location. The ToF sensor 430 has a relatively smaller sensing range than the depth camera 411, and the LiDAR sensor 420 may only detect an object of a specific height.

As such, each obstacle detection sensor 143 has an object that may be mis-detected, and its sensing range is also limited. Accordingly, when the robot 100a approaches an object that is not well detected or is mis-detected, a situation may occur in which the robot collides with the object or fails to pass through the object due to misdetection. For example, the robot 100a collides with a high chair with thin/slender legs, or collides while driving on a narrow passage made of glass walls. There may be a situation in which the robot is not capable of passing through a narrow passage implemented with a vertical repeat pattern.

According to the present disclosure, considering the characteristics of the sensor included in the robot 100a, an object that may be mis-detected is detected, and the purpose of the robot 100a is to safely move to a location at which a service recipient may be comfortably served or to effectively respond to a narrow passage.

The processor 180 may prevent collision by changing obstacle information stored in the map according to obstacles present at the destination point or the driving path. The processor 180 may actively change the destination point depending on whether the destination point is occupied by an obstacle, thereby appropriately responding to the current situation of the driving area.

The robot 100a may determine the property of an obstacle based on an image obtained by a camera sensor 142, and may safely move to the closest possible location to the customer at the destination point by considering the type, sensing method, and property of the obstacle detection sensor 143 provided.

The robot 100a configures a local map (cost map) based on sensing data from the obstacle detection sensor 143, plans a path to avoid obstacles displayed on the corresponding map, and drives to avoid the obstacles.

There is a method to obtain an estimated distance to an object based on an RGB camera, but the accuracy is low and it is difficult to use for proximity avoidance driving. Therefore, the local map (cost map) used by the robot for avoidance driving may include 3D data based on a distance sensor for measuring a distance to an object. However, due to the characteristics of the distance sensor, objects that are capable of being detected or have low distance sensing accuracy often exist as features of the store environment and interior.

The robot 100a includes the memory 170 in which a map is stored, the processor 180 that generates a driving path to a destination point set on the map, the plurality of obstacle detection sensors 143 that detect obstacles while driving based on the driving path, and the camera sensor 142 that obtains an image while driving.

The memory 170 stores a map based on sensing data of the obstacle detection sensor 143 capable of measuring the distance to an obstacle.

The processor 180 recognizes an obstacle present at the destination point or on the driving path based on the image obtained by the camera sensor 142. The processor 180 recognizes an obstacle included in an image obtained by the camera sensor 142. The processor 180 may determine whether the recognized obstacle is an object likely to be mis-detected by the obstacle detection sensor 143.

In some embodiments, the learning processor 130 may receive an image and learn to recognize an obstacle. The learning processor 130 may respond to the processor 180 with information about the recognized obstacle.

The camera sensor 142 may be an RGB 2D camera. The camera sensor 142 may be the camera sensor 412 of the camera module 410 illustrated in FIG. 4. Alternatively, the camera sensor 142 may be an RGB 2D camera separately provided in the depth camera 411.

The obstacle detection sensor 143 may include a plurality of sensors of different types. The obstacle detection sensor 143 may include sensors of different types to improve sensing accuracy and have a diverse sensing range. For example, the obstacle detection sensor 143 may include the LiDAR sensor 420 and the ToF sensor 430. The obstacle detection sensor 143 may further include the depth camera 411.

The processor 180 may determine whether the obstacle has a property that may have a risk of misdetection (whether it has thin/slender legs, whether it is made of a material that is difficult to detect such as glass, or whether it has a vertical repeat pattern).

The processor 180 may increase the size of an obstacle set on the map based on the property of the recognized obstacle. That is, the processor 180 may update the map by increasing the size of the obstacle set on the map.

The processor 180 may increase the size of the obstacle on the map in a situation in which it is necessary to drive within a predetermined distance of a recognized obstacle, and may maintain the size of the obstacle in other situations. For example, a situation in which proximity driving is required may be when an object occupies the set destination point or when an object forms a narrow passage.

The processor 180 may regenerate a path based on the updated map. As the size of the obstacle on the map has increased, the regenerated path is determined to avoid obstacles from a greater distance. Accordingly, the robot 100a may approach an obstacle with a risk of misdetection without collision up to the maximum level of sensor performance provided.

When a situation arises in which the robot 100a needs to approach an object that is at risk of misdetection by the obstacle detection sensor 143, the processor 180 determines what the object is based on an image obtained by the camera sensor 142.

When driving close to an object, the processor 180 uses the camera sensor 142 to check whether the object is at risk of collision or difficult to pass through due to inaccurate distance. The processor 180 may determine whether the property of the recognized obstacle correspond to a misdetection risk obstacle.

The misdetection risk obstacle may be set in response to the type and sensing method of the obstacle detection sensor 143. The misdetection risk obstacle may be set by type and may be set depending on whether an object has specific properties such as being narrow, having a vertical repeat pattern, or a material.

When the property of the recognized obstacle corresponds to the misdetection risk obstacle, the processor 180 may increase the obstacle size set on the map. When an object is a misdetection risk obstacle with a high possibility of misdetection, the processor 180 may limit the accessible distance by expanding the size of the corresponding object on a local map.

For example, when a dynamic obstacle such as a high chair is placed at an arrival location of a store table, the chair on which the child sits is reflected larger on the map to prevent accidents by ensuring that the robot 100a and serving items do not come as close to the child as possible.

On the other hand, in terms of a safety, the destination point may be changed rather than arriving as close as possible to an object or person occupying the destination. Therefore, according to an embodiment of the present disclosure, the processor 180 may preferentially attempt to change the destination point depending on an obstacle occupancy state of the destination point. The processor 180 may, based on a serving space, a serving item, or user settings, preferentially attempt to change the destination point rather than changing the size of obstacles on the map.

The processor 180 generates a driving path to a first destination point corresponding to the received destination, and the robot 100a may drive along the generated driving path to the first destination point.

When there is an obstacle occupying the first destination point, the processor 180 recognizes the property of the obstacle occupying the first destination point based on the image obtained by the camera sensor 142.

When the property of the recognized obstacle corresponds to a misdetection risk obstacle, the processor 180 may prevent misdetection and collision previously by changing the destination point from the first destination point to the second destination point.

The processor 180 may change the destination point from the first destination point to the second destination point when an obstacle occupies the destination point. In this case, the processor 180 may determine a point farthest from the first destination point among moving candidate points as the second destination point based on placement distribution of an obstacle adjacent to the first destination point.

When there is a table near the destination point, the moving candidate point may be a point to which the robot 100a may move among points around the table closest to the first destination point.

When it is impossible to change the destination point to the second destination point, the processor 180 may increase the size of the obstacle set on the map. For example, there may be fixed obstacles such as walls, dynamic obstacles such as people or animals, or other obstacles near the first destination point, making it impossible to set a new destination point. In this case, the processor 180 updates the map by increasing the size of the obstacle set on the map. The processor 180 may bring the robot 100a as close as possible to the destination point without colliding with an obstacle occupying the destination point based on the updated map.

The processor 180 may change the size of the obstacle in the cost map when the property of the recognized obstacle corresponds to a misdetection risk obstacle. The cost map may be a local map and may be used for obstacle avoidance driving.

In more detail, the processor 180 may increase the number of grids in which a recognized obstacle is located in the cost map. The processor 180 may increase cost values of grids in which a recognized obstacle is located in the cost map.

The processor 180 may increase only the cost values of grids in which a recognized obstacle is located in the cost map.

According to an embodiment of the present disclosure, when the obstacle occupies the destination point, the processor 180 changes the destination point to prevent a collision or a situation in which the vehicle is not capable of passing through.

Not only at the destination point but also during driving, the processor 180 may change the size of the obstacle on the map depending on the property of the recognized obstacle. The processor 180 determines the property of an obstacle forming a narrow passage on the driving path. when the property of the recognized obstacle corresponds to a misdetection risk obstacle set in accordance with the type and sensing method of the obstacle detection sensor 143, the processor 180 may increase the size of the obstacle set on the map and regenerate the driving path.

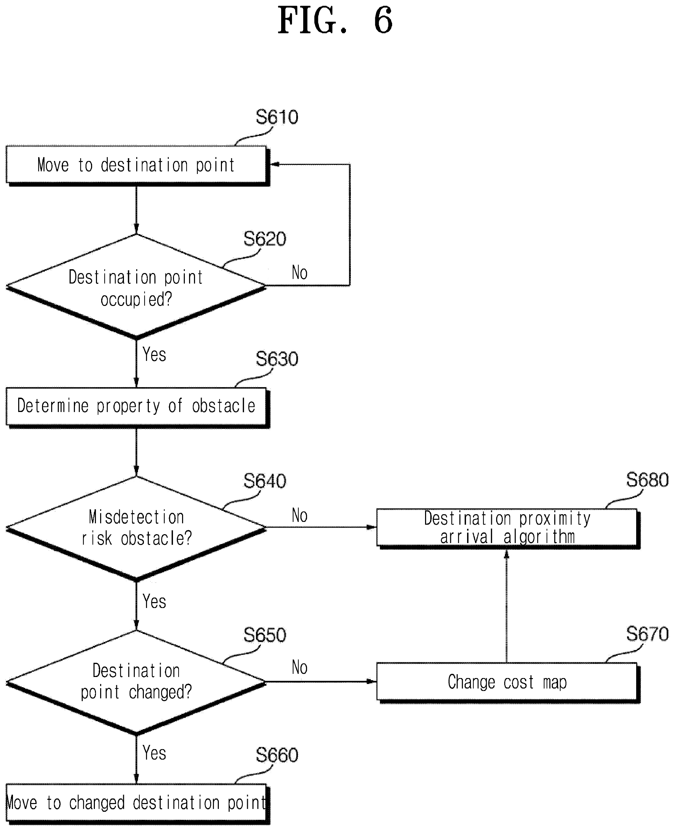

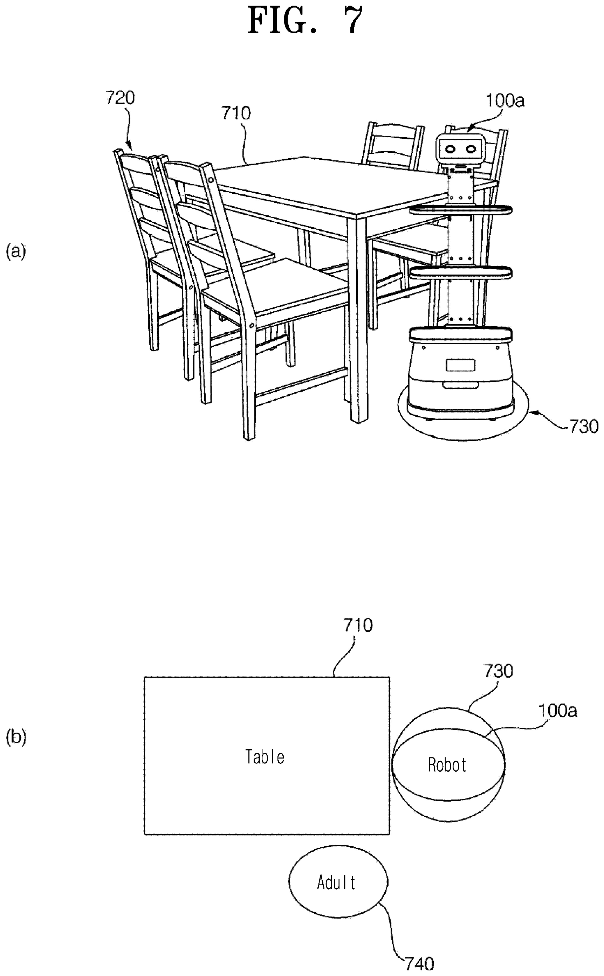

FIG. 6 is a flowchart illustrating an operating method of a robot according to an embodiment of the present disclosure. FIGS. 7 to 16c are drawings for reference in a description of an operating method of a robot according to an embodiment of the present disclosure.

Referring to FIG. 6, first, the robot 100a moves to a set destination point (S610).

Referring to (a) and (b) of FIG. 7, there is one or more tables 710 within a driving area. Chairs 720 may be arranged on a long side of the table 710, and a destination point 730 corresponding to the table 710 may be set on either side of the short side.

A user may input a destination to the robot 100a by manipulating a predetermined terminal. On a manipulation screen of the user, only the table 710 may be displayed, or the table 710 and the destination point 730 may be displayed together.

When the user inputs the table 710 or the destination point 730 as a destination, the processor 180 generates a driving path to the destination point 730, and the robot 100a moves to the destination point 730 along the set driving path (S610).

When the destination point 730 is empty (S620), the robot 100a moves to the destination point 730 and then ends driving (S610). An adult 740 sitting on a chair 720 may receive a serving item from the robot 100a that has moved to the destination point 730.

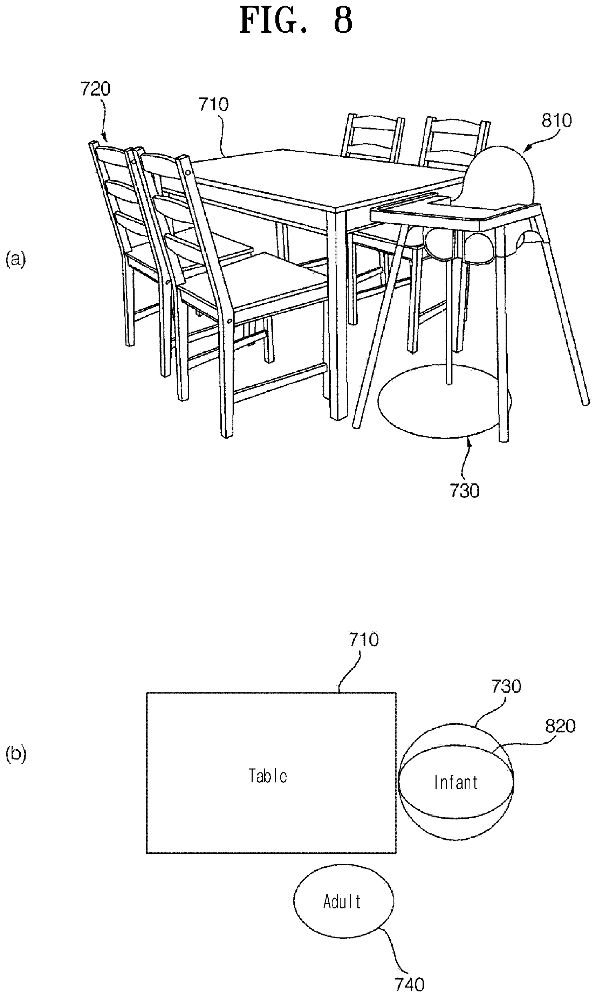

Referring to (a) and (b) of FIG. 8, a high chair 810 for an infant 820 who is not capable of sitting on the chair 720 for adults may be placed at the destination point 730.

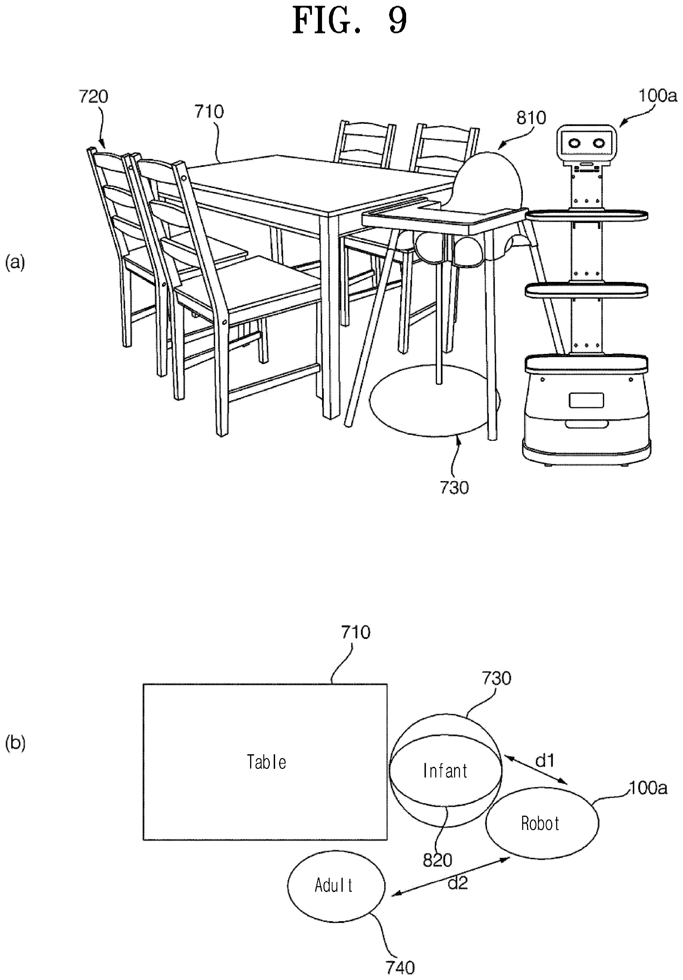

Referring to (a) and (b) of FIG. 9, when there is the high chair 810 and the infant 820 at the destination point 730 in which the robot 100a originally intends to arrive, the existing method distributes food near the high chair 810 and the infant 820 at a predetermined distance d1 according to a destination proximity arrival algorithm. In this case, an infant is at risk due to exposure to the served food, and the adult 740 has a difficulty in taking the food out immediately due to a long distance d2 from the robot 100a.

FIGS. 8 and 9 illustrate the high chair 810 with thin and long legs is illustrated as a misdetection risk obstacle, but the misdetection risk obstacle may vary depending on the material, shape, and sensor of the robot 100a.

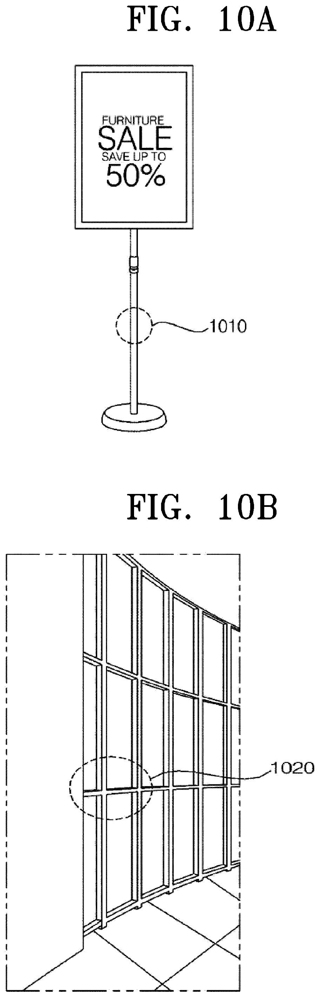

FIGS. 10a to 10f illustrate various misdetection risk obstacles.

Referring to FIG. 10a, a sign having a thin/slender metal rod 1010 similar to the high chair 810 may also be considered as a misdetection risk obstacle.

Referring to FIG. 10b, a window glass 1020 may also be a misdetection risk obstacle. Although the window glass 1020 is a fixed obstacle in itself, another dynamic obstacle may generate a narrow passage with the window glass 1020 on one side.

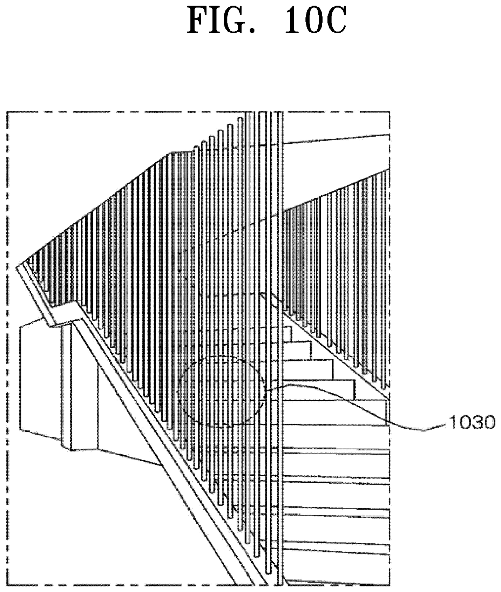

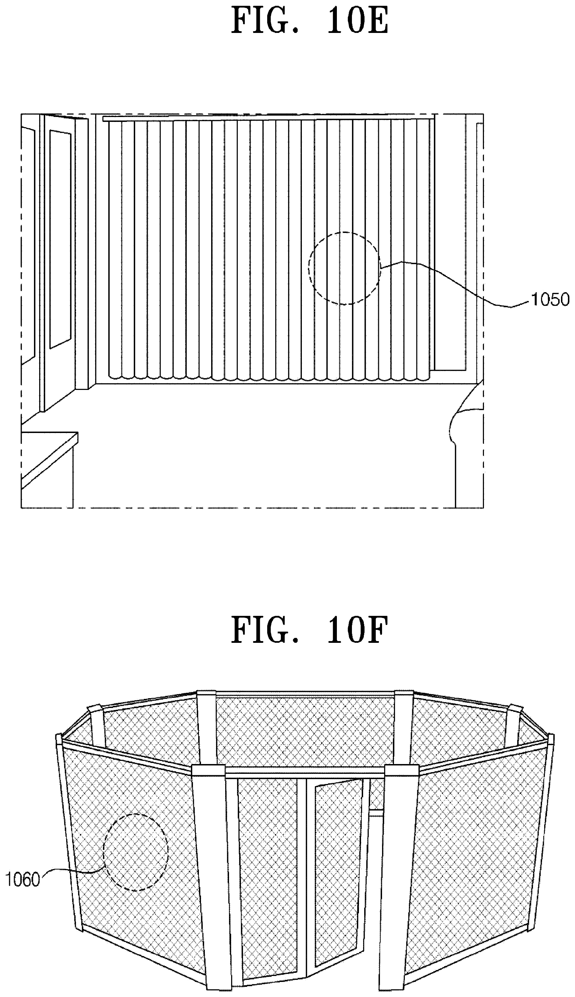

Referring to FIG. 10c, FIG. 10e and FIG. 10f, there is also a risk of misdetection in a vertical decoration 1030, a blind with repeat patterns 1050, and a pet panel 1060.

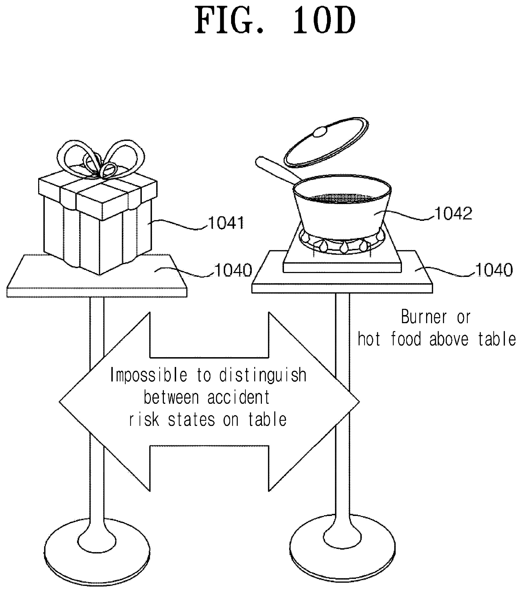

Referring to FIG. 10d, the obstacle detection sensor 143 only detects objects and distances, and therefore may not determine a risk state and a risk level. For example, the risk level is very different between a paper box 1041 placed on a table 1040 and a burner and hot food 1042 placed on the table 1040.

As such, glass, a thin/slender-legged object, a metal material, a vertical repeat pattern decoration, a burner on a table, and the like may be considered as a misdetection risk obstacle.

When an obstacle occupying the destination point 730 is detected by the obstacle detection sensor 143 (S620), the processor 180 determines an obstacle based on the image obtained by the camera sensor 142 (S630). That is, when a situation occurs in which there is an object at the destination point 730 and the robot 100a needs to approach the object, the processor 180 may distinguish what the object is from an image obtained by the camera sensor 142. The processor 180 determines whether the object is at risk of collision or difficult to pass through because the sensing distance accuracy of the obstacle detection sensor 143 is low when the object is driven close to the vehicle.

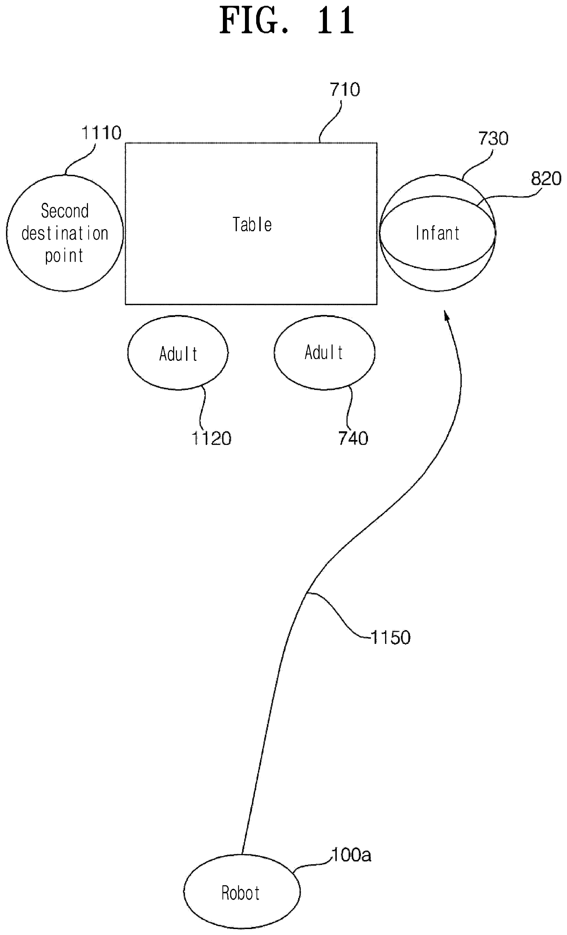

Referring to FIG. 11, the obstacle detection sensor 143 of the robot 100a traveling along a first driving path 1150 may detect an obstacle occupying the destination point 730 (S620). The processor 180 may recognize the high chair 810 and/or the infant 820 at the destination point 730 based on the image obtained by the camera sensor 142.

In some embodiments, when the destination point 730 is occupied by an object of which a distance is difficult to detect (S640), the processor 180 may change the location of the destination point 730 to another side and generate a path to go to the changed destination point (S650).

The processor 180 may control the robot 100a to drive according to the changed destination point and path (S660).

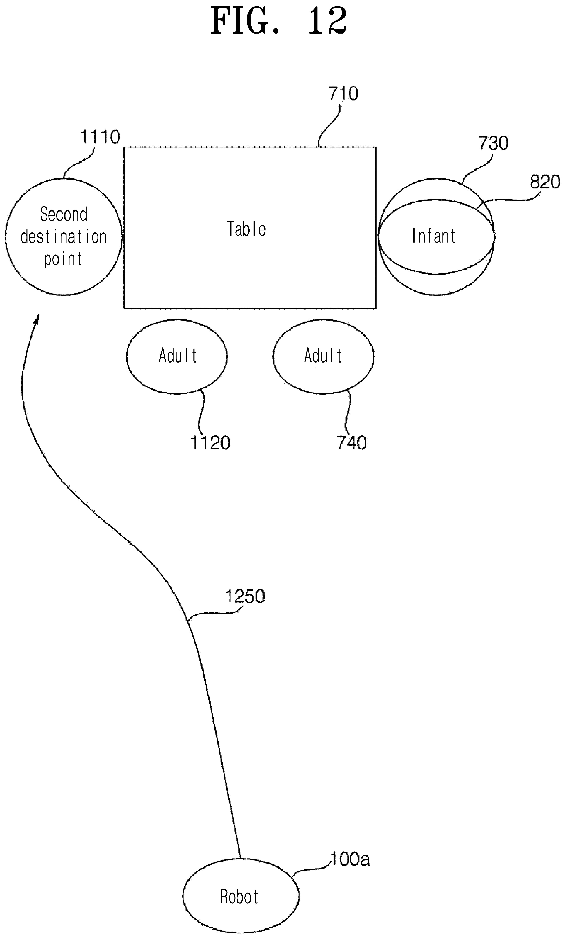

Referring to FIG. 12, the processor 180 may change the destination point from the originally set first destination point 730 to a second destination point 1110. The processor 180 may generate a new second driving path 1250 to the second destination point 1110.

Referring to FIGS. 11 and 12, there are adults 740 and 1120 on the long side of the table 710, and the opposite side of the first destination point 73 based on the table 710 is empty. Accordingly, the second destination point 1110 may be set on the empty side of the table 710.

The location of the long side of the table 710 in which there are no adults 740 and 1120 needs to pass the first destination point 730, the second destination point 1110 is better in terms of efficiency and safety.

When the determined obstacle or obstacle property corresponds to a misdetection risk obstacle (S640), the processor 180 increases the obstacle size on the cost map and changes the cost map (S670).

When the destination point 730 is not occupied by an object that is difficult to detect, there is no problem with the distance measurement accuracy of the obstacle detection sensor 143, and thus the robot 100a may end driving after moving to a location as close as possible to the object according to the destination proximity arrival algorithm (S680). The destination proximity arrival algorithm is a driving algorithm that, when there is an obstacle at the destination, causes the robot 100a to approach the original destination coordinates to an allowable proximity distance corresponding to the driving performance and sensing performance of the robot 100a. The allowable proximity distance may be set by taking into account a margin to prevent collision.

When the destination point is occupied by an object of which a distance is difficult to detect (S640) and it is difficult to change the destination point location (S650), the processor 180 may increase the cost map occupied size of the corresponding obstacle (S670). The processor 180 may control the movement of the robot 100a by using a destination proximity arrival algorithm based on the changed cost map (S680).

That is, the processor 180 sets a distance limit for approaching a misdetection risk obstacle of the obstacle detection sensor 143 to be further away than that for other obstacles. By increasing a cost map occupancy size of the obstacle, the robot 100a approaches the obstacle detected by the obstacle detection sensor 143 less often in proportion to the increased occupancy size. Therefore, it is possible to prevent the robot 100a from colliding with an obstacle at the destination point.

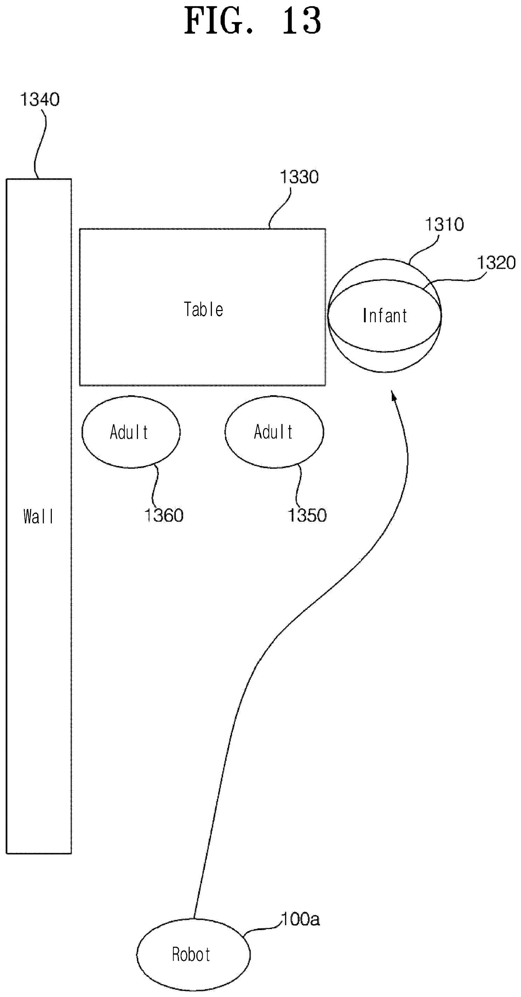

Referring to FIG. 13, an originally set first destination point 1310 is occupied by an object 1320 of which a distance is difficult to detect. There are a wall 1340 and adults 1350 and 1360 around a first table 1330, and the remaining locations need to pass the first destination point 1310, and thus changing the destination point may be difficult.

In this case, the processor 180 may increase the cost map occupancy size of a corresponding obstacle 1320 to expand the access restriction range around the corresponding obstacle 1320.

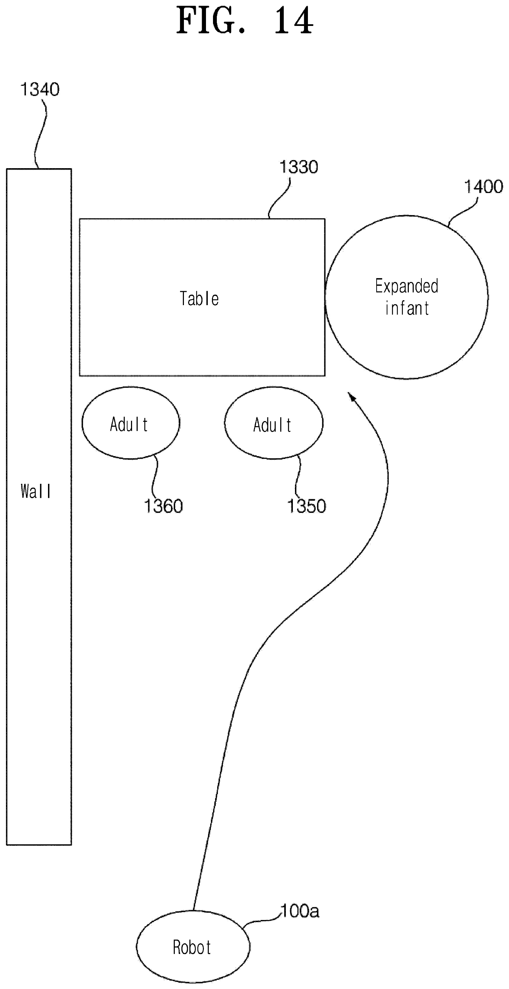

FIG. 14 conceptually illustrates an expanded obstacle 1400 by increasing its size on a cost map. The expanded obstacle 1400 corresponds to an expanded infant size recognized by the robot 100a.

Even if a proximity arrival algorithm in which the robot 100a arrives near a destination is applied when there is the obstacle 1320 at the destination, a child is drawn large as an obstacle 1400 on the cost map, and thus the robot 100a arrives farther away from an infant 1320 and closer to an adult 1350.

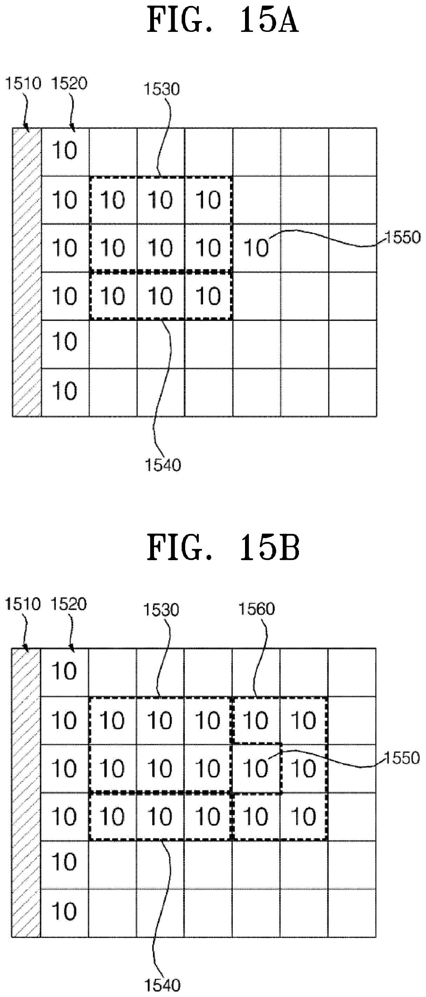

Referring to FIG. 15a, the processor 180 may generate a cost map by assigning a cost to an environment of a driving area. For example, the processor 180 may set cost information in grids of the cost map based on environmental information of the driving area.

Referring to FIGS. 15a and 15b, a hatched grid 1510 may represent a boundary line of the driving area (wall, obstacle, or the like), and a white grid may represent the driving area in which the robot 100a is capable of driving.

Costs may be assigned to the grids based on environmental information such as presence of an obstacle, the type of the obstacle, the size of the obstacle, and whether the obstacle is adjacent. A grid in a normal area without obstacles may have its cost set to 0. Alternatively, a grid in a general area without obstacles may have a relatively low cost set based on a distance to an obstacle.

For example, a first value is set for a risk area 1520 corresponding to a fixed object or boundary line. Costs may be assigned to respective areas 1530 and 1540 corresponding to obstacles such as tables and people. A cost value '10', and the like exemplified in this specification is provided to aid understanding, and the present disclosure is not limited thereto.

When the obstacle detection sensor 143 detects an obstacle at the destination point, the processor 180 may assign a cost to a corresponding grid 1550. The processor 180 may determine an obstacle based on an image obtained by the camera sensor 142.

When an object is determined to be a misdetection risk obstacle, the processor 180 may assign a cost set to the obstacle to an area 1560 expanded beyond a destination point 1550. As such, the processor 180 may increase the size of the misdetection risk obstacle on the cost map.

Various costs may be assigned to the respective grids based on environmental information such as presence of an obstacle, the type of the obstacle, the size of the obstacle, and whether the obstacle is adjacent.

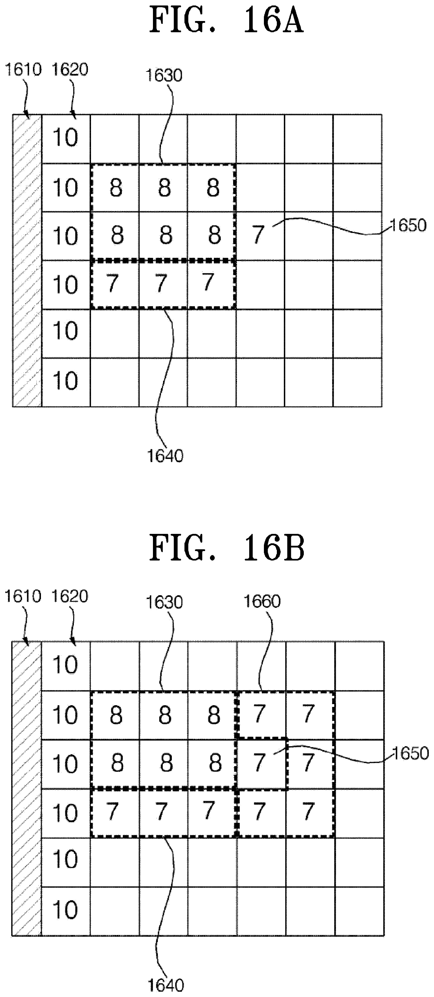

Referring to FIGS. 16a to 16c, a first value is set for a risk area 1620 corresponding to a fixed object or boundary line 1610. Costs may be assigned to respective areas 1630 and 1640 corresponding to obstacles such as tables and people.

For example, a first value may be set for the risk area 1620 adjacent to the fixed object or boundary line 1610, and a second value lower than the first value may be set for obstacle detection areas 1630 and 1650 other than the risk area 1620. In some embodiments, the cost assigned to each grid may also be set differently depending on the type and size of the obstacle.

The cost information of each grid may mean the possibility that the robot 100a may avoid or collide with an obstacle when moving through the corresponding grid, or the possibility that the robot 100a may move adjacent to an obstacle. A grid with zero or low cost may include a case in which the robot 100a is far from an obstacle such as a fixed object or a moving object.

In the cost map, the grid may be displayed in different display states depending on environment information, cost, and the like of the grid. For example, each grid may be displayed with different colors and saturations, and the like. Accordingly, the cost map may intuitively display costs in the form of contour lines.

A predetermined cost (e.g., 8) may be assigned to an area 1630 corresponding to a table, and a different cost (e.g., 7) may be assigned to the area 1640 corresponding to an obstacle such as a person.

When the obstacle detection sensor 143 detects an obstacle at the destination point, the processor 180 may assign a cost to the corresponding grid 1650. The processor 180 may determine an obstacle based on an image obtained by the camera sensor 142.

Referring to FIG. 16b, when an object is determined to be a misdetection risk obstacle, the processor 180 may assign a cost set to the obstacle to an area 1660 expanded beyond the destination point 1650.

Referring to FIG. 16b, the processor 180 may increase the size of the misdetection risk obstacle on the cost map by assigning a cost that is the same as or lower than the destination point 1650 to the expanded area 1660.

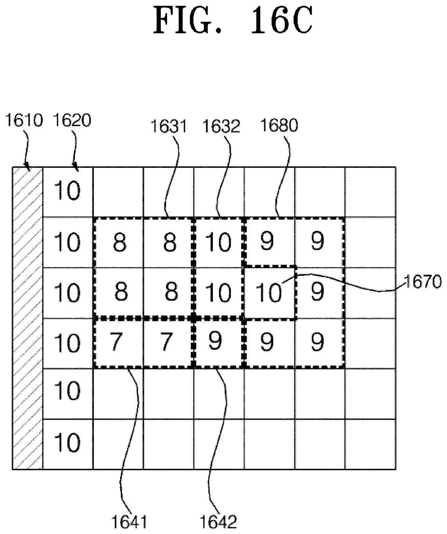

Referring to FIG. 16c, when an object is determined to be a misdetection risk obstacle, the processor 180 may increase the cost in a destination point 1670 and areas 1632, 1642, and 1680 adjacent to the destination point 1670.

The processor 180 may increase the cost of the destination point 1670 in which the misdetection risk obstacle is located.

The processor 180 may assign a set cost to the adjacent area 1680 with a cost of 0.

The processor 180 may also increase the cost of the adjacent areas 1632 and 1642. Accordingly, the costs of the area 1630 corresponding to a table may differ in the area 1632 close to the misdetection risk obstacle and the area 1631 far from the misdetection risk obstacle. The costs of the area 1640 corresponding to a person may differ in the area 1642 close to the misdetection risk obstacle and the area 1641 far from the misdetection risk obstacle.

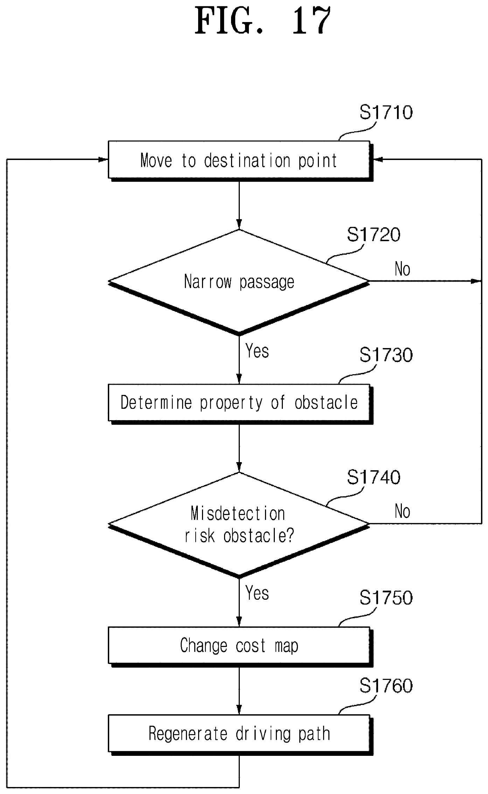

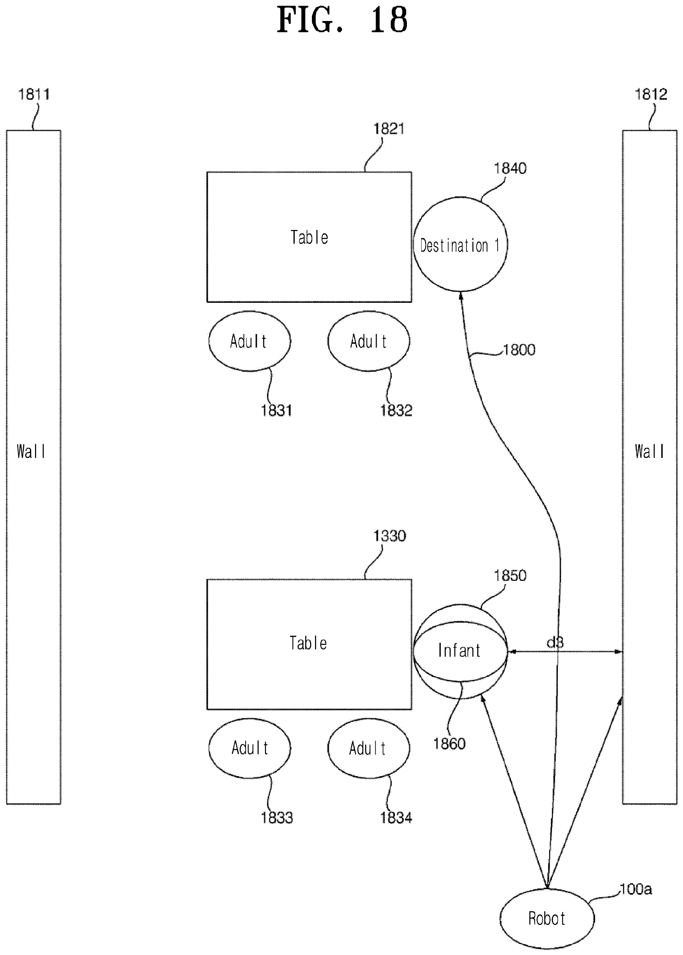

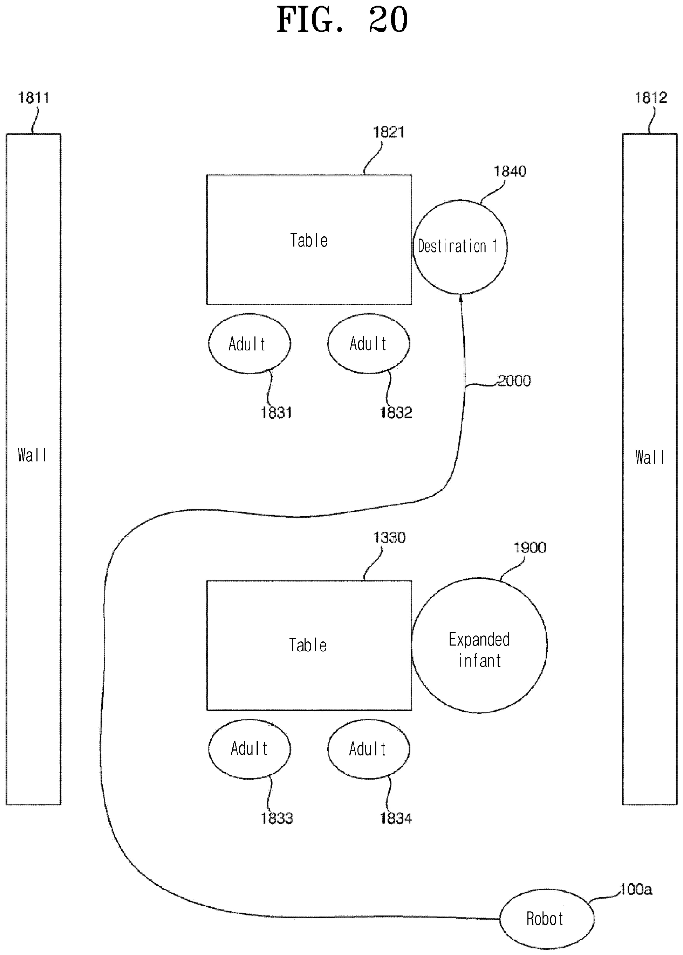

FIG. 17 is a flowchart illustrating an operating method of a robot according to an embodiment of the present disclosure, and FIGS. 18 to 20 are diagrams for reference in an explanation of an operating method of a robot according to an embodiment of the present disclosure.

Referring to FIGS. 17 and 18, first, the robot 100a moves along a set driving path 1800 to a first destination point 1840 (S1710).

Referring to FIGS. 18 to 20, walls 1811 and 1812 may be positioned on both sides of the driving area, and a first table 1821 and a second table 1822 may be positioned between the walls 1811 and 1812 on both sides.

When an input with the first table 1821 or the first destination point 1840 as a destination is received, the processor 180 may generate the shortest driving path 1800 to the first destination point 1840.

When the first destination point 1840 is empty and there are no special circumstances in driving to the first destination point 1840 (S1720), the robot 100a ends driving after moving to the first destination point 1840 (S1710). Adults 1831 and 1832 sitting on a chair near the first table 1821 may receive a serving item from the robot 100a that has moved to the first destination point 1840.

A narrow passage with a narrow width d3 may be set in the middle of the driving path 1800 along which the robot 100a moves to the first table 1821 due to an obstacle 1860 such as a high chair (S1720).

For example, there may be a plurality of obstacles located between the robot 100a and the first destination point 1840, such as the second table 1822, an infant 1860, and adults 1833 and 1834. Alternatively, after the robot 100a starts driving, a new obstacle such as the infant 1860 and the adults 1833 and 1834 may appear.

When the robot 100a moves along the driving path 1800 and the obstacle detection sensor 143 detects a narrow passage caused by an obstacle (S1720), the processor 180 determines the obstacle based on an image obtained by the camera sensor 142 (S1730). That is, when a situation arises in which the robot 100a needs to approach an object and pass through a narrow passage, the processor 180 may distinguish what the object is from an image obtained by the camera sensor 142. The processor 180 determines whether a corresponding object is a misdetection risk obstacle that is at risk of collision or difficult to pass through because the sensing distance accuracy of the obstacle detection sensor 143 is low when the object is driven close to the vehicle.

When the obstacle 1860 is not a misdetection risk obstacle (S1740), the processor 180 controls the robot 100a to travel the shortest distance to the first destination point 1840 through the narrow passage while measuring a distance at which a collision with the obstacle 1860 does not occur (S1710).

When the obstacle 1860 is a misdetection risk obstacle (S1740), the processor 180 changes the cost map by increasing the size of the obstacle on the cost map (S1750).

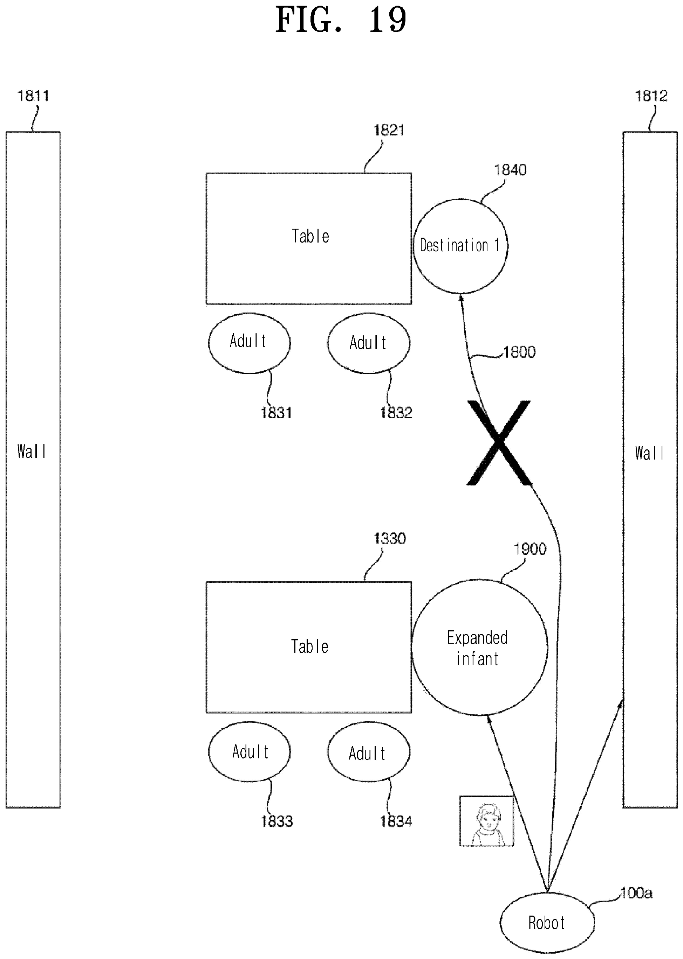

Referring to FIGS. 18 and 19, the occupied size on the cost map increases from a first size 1850 to a second size 1900. When there is an object of which a distance is difficult to detect on the way to the destination (S1740), the processor 180 may prevent the robot 100a from approaching the obstacle 1860 excessively by increasing the cost map occupancy size of the corresponding obstacle.

The processor 180 regenerates a driving path based on the changed cost map (S1760). When an obstacle forming the narrow passage may cause safety problems if the obstacle gets too close to an infant or a glass wall, the processor 180 recognizes the object by increasing the cost map occupancy size of the object 1860. Referring to FIG. 19, a path 1800 that needs to approach the corresponding object 1860 is not generated.

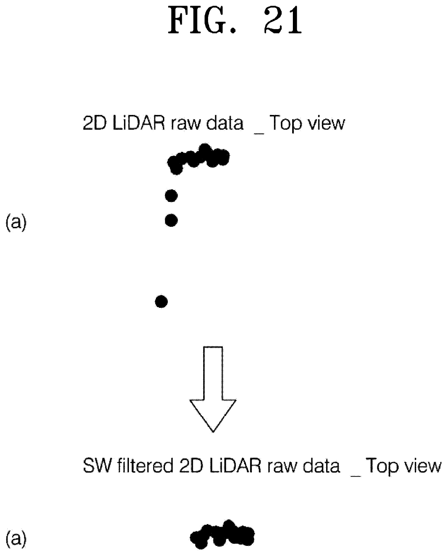

Referring to FIG. 21, a regenerated driving path 2000 may be generated away from an expanded infant 1990 (S1760), and the robot 100a may move along the regenerated driving path 2000 to the destination point 1840 (S1710).

According to an embodiment of the present disclosure, when an object of which a distance is difficult to detect is identified in the middle of the way to a destination, approaching may be prevented by increasing the cost map occupancy size of the obstacle. According to an embodiment of the present disclosure, when the corresponding obstacle constitutes a narrow passage, a distance limit for approaching other obstacles may be set further by increasing the cost map occupancy size of the corresponding obstacle.

The processor 180 may improve the sensing accuracy of a misdetection risk obstacle by lowering a noise software filtering level of the LiDAR sensor 430.

FIG. 21 is a diagram for reference in a description of sensing software processing according to an embodiment of the present disclosure.

An object with thin legs, such as the high chair 810, is difficult to detect reliably with the depth camera 411 or the LiDAR sensor 430. In particular, the legs of the high chair 810 expand from the outside (ladder-shaped), and thus there is a possibility of collision with the robot 100b when the legs of the high chair 810 are not detected.

In the case of LiDAR, the LiDAR has edge noise due to its characteristics. Noise occurs at the edges of objects. Therefore, this noise needs to be removed using a software filter, but in the case of thin/slender chair legs, this noise may not be distinguished and is therefore deleted.

(a) of FIG. 12 illustrates a top view of raw data detected by a 2D LiDAR sensor, and (b) of FIG. 12 illustrates a top view of data detected by a 2D lidar sensor after software filtering is performed.

Therefore, the processor 180 alleviates a software (SW) noise removal filter of the LiDAR sensor 430 when the high chair 810 is in proximity, thereby allowing the thin chair legs to be detected well.

The processor 180 increases the occupancy size of the high chair 810 on the cost map while improving the detection performance by lowering the noise software filtering level of the LiDAR sensor 430. In this case, a new path is not generated, and thus there is no problem in driving even if LiDAR edge noise occurs. Therefore, when it is necessary to approach near the high chair 810, in addition to detecting that an object is the high chair 810 and expanding the high chair 810 and reflecting the same in the cost map, the SW filter strength of the LiDAR sensor 430 is set to weak to improve the detection performance for a thin object.

Although embodiments have been described with reference to the drawings, those skilled in the art will appreciate that various modifications and variations may be made in the embodiments without departing from the spirit or scope of the present disclosure described in the appended claims. Such modifications are not to be understood individually from the technical idea or perspective of the embodiments.

## Claims

1. A robot comprising:
a memory storing a map;
a processor configured to generate a driving path to a destination point set on the map;
a plurality of obstacle detection sensors configured to detect an obstacle while driving based on the driving path; and
a camera sensor configured to obtain an image while driving,
wherein, based on the image obtained by the camera sensor, the processor recognizes a property of the obstacle existing at the destination point or on the driving path, and based on the property of the recognized object, increases an obstacle size set on the map.

2. The robot of claim 1, wherein, based on the property of the recognized obstacle corresponding to a misdetection risk obstacle set in accordance with a type and sensing method of the obstacle detection sensor, the processor increases the obstacle size set on the map.

3. The robot of claim 1, wherein the map is a cost map including a plurality of grids and having costs assigned to the plurality of grids, and
the processor increases a number of grids in which the recognized obstacle is located in the cost map.

4. The robot of claim 3, wherein the processor increases a cost value of the grids in which the recognized obstacle is located in the cost map.

5. The robot of claim 1, wherein the map is a cost map including a plurality of grids to which costs are assigned, and
the processor increases a cost value of grids in which the recognized obstacle is located in the cost map.

6. The robot of claim 1, wherein the obstacle detection sensor includes a light detection and ranging (LiDAR) sensor and a time of flight (ToF) sensor.

7. The robot of claim 6, wherein the processor lowers a noise software filtering level of the LiDAR sensor.

8. The robot of claim 1, wherein, in a situation in which the robot needs to drive within a predetermined distance of the recognized obstacle, the processor increases a size of the obstacle, and in other situations, maintains the obstacle size.

9. The robot of claim 1, wherein, based on the obstacle occupying the destination point, the processor changes the destination point from a first destination point to a second destination point.

10. The robot of claim 9, wherein, based on placement distribution of an obstacle adjacent to the first destination point, the processor determines a point farthest from the first destination point among moving candidate points as the second destination point.

11. The robot of claim 10, wherein the moving candidate point is a point to which the robot is capable of moving among points around a table closest to the first destination point.

12. The robot of claim 1, wherein the processor determines a property of an obstacle forming a narrow passage on the driving path, increases the obstacle size set on the map based on the property of the recognized obstacle corresponding to a misdetection risk obstacle set in accordance with a type and sensing method of the obstacle detection sensor, and regenerates the driving path.

13. A robot comprising:
a memory storing a map;
a processor configured to generate a driving path to a first destination point set on the map;
a plurality of obstacle detection sensors configured to detect an obstacle while driving based on the driving path; and
a camera sensor configured to obtain an image during the driving,
wherein, based on presence of an obstacle occupying the first destination point, the processor recognizes a property of the obstacle occupying the first destination point based on the image obtained by the camera sensor, and changes a destination point to a second destination point based on the property of the recognized obstacle corresponding to a misdetection risk obstacle set in accordance with a type and sensing method of the obstacle detection sensor.

14. The robot of claim 13, wherein, based on changing of the destination point to the second destination point being impossible, the processor increases an object size set on the map.

15. The robot of claim 14, wherein the map is a cost map including a plurality of grids and having costs assigned to the plurality of grids, and
the processor increases a number of grids in which the recognized obstacle is located in the cost map.

16. The robot of claim 15, wherein the processor increases a cost value of the grids in which the recognized obstacle is located in the cost map.

17. The robot of claim 14, wherein the map is a cost map including a plurality of grids to which costs are assigned, and
the processor increases a cost value of the grids in which the recognized obstacle is located in the cost map.

18. The robot of claim 13, wherein, based on placement distribution of an obstacle adjacent to the first destination point, the processor determines a point farthest from the first destination point among moving candidate points as the second destination point.

19. The robot of claim 13, wherein the obstacle detection sensor includes a LiDAR sensor, and
the processor lowers a noise software filtering level of the LiDAR sensor.

20. The robot of claim 13, wherein the processor determines a property of an obstacle forming a narrow passage on the driving path, increases the obstacle size set on the map based on the property of the recognized obstacle corresponding to a misdetection risk obstacle set in accordance with a type and sensing method of the obstacle detection sensor, and regenerates the driving path.
